# EUROPEAN PATENT APPLICATION

(11) **EP 1 775 907 A2**
(43) Date of publication of application: **18.04.2007**
(21) Application number: 06255227.8
(22) Date of filing: 11.10.2006
(51) Int. Cl.: H04L 29/06, H04L 12/22

(54) **Handling identity information**

(30) Priority: 11.10.2005 GB 0520660
(71) Applicant: Vodafone Group PLC, Newbury Berkshire RG14 2FN (GB)
(72) Inventor: Papadoglou, Nick, Reading RG30 2ER (GB); Zizimopoulos, H c/o Vodafone Group Plc., Newbury, Berkshire RG14 2FN (GB)
(74) Representative: Foster, Mark Charles

(57) **Abstract**

A telecommunications network including a plurality of terminals 1,11 is disclosed, each having a presence status. A presence server 40 monitors the presence status of each of the terminals 1,11. The terminal 11 is operable to invite the terminal 11 to publish its presence status to the first terminal 1 via the presence server 40. In response to the invitation the presence server 40 is operable to seek acceptance from the second terminal 11. The presence server 40 stores security data respective to each of the terminals 1,11. In response to the acceptance by the terminal 11, the presence server 40 provides the first terminal 1 with the security data of the terminal 11. This is used to establish a secure communication session between the terminal 1 and the terminal 11. The security data may, for example, be a public key of the terminal 11. The security data may be a Host Identity, or a Host Identity Tag. An extension to Presence Information Data Format is disclosed for transmitting the security data between the terminals 1,11 and the presence server 40.

## Description

The invention relates to a telecommunications network including a plurality of terminals, each having a presence status; and a presence server for monitoring the presence status of each of the terminals, wherein a first of said terminals is operable to invite a second of said terminals to publish its presence status to the first of said terminals via the presence server, in response to which the presence server is operable to seek acceptance from the second terminal of the invention. More particularly, but not exclusively, the invention relates to using such a presence server arrangement to distribute security data in a controlled manner. The invention also relates to a method of operating a telecommunications system.

The third generation partnership project (3GPP) has recently defined a new concept known as IMS (IP-based Multimedia Subsystem). The IMS is a set of core network servers sitting behind the GGSN (which will be briefly described below) in the packet switched domain. These servers are introduced in order to process signalling between end users. The aim of IMS is to allow bodies such as mobile telephone network operators to provide services to their users as efficiently and effectively as possible. For example, the IMS architecture is likely to support the following communication types, voice, video, instant messaging (IM), "presence" (a user's availability for contact), location-based services, email and the web. Further communication types are likely to be added in the future.

The diverse collection of communications devices requires efficient session management due to the number of different applications and services that will be developed to support these communication types. The 3GPP have chosen Session Initiation Protocol (SIP) for managing these sessions.

The SIP protocol is a session-based protocol designed to establish IP based communication sessions between two or more end points or users. Once a SIP session has been established, communication between these end points or users can be carried out using a variety of different protocols (for example those designed for streaming audio and video). These protocols are defined in the SIP session initiation messages.

With IMS, users are no longer restricted to a separate voice call or data session. Sessions can be established between mobile devices that allow a variety of communication types to be used and media to be exchanged. The sessions are dynamic in nature in that they can be adapted to meet the needs of the end users. For example, two users might start a session with an exchange of instant messages and then decide that they wish to change to a voice call, possibly with video. This is all possible within the IMS framework. If a user wishes to send a file to another user and the users already have a session established between each other (for example, a voice session) the session can be redefined to allow a data file exchange to take place. This session redefinition is transparent to the end user.

The SIP architecture uses URIs (e.g. user@domain) to identify endpoints, and includes various infrastructure components, including registrars (which map URIs to IP addresses or host names), redirect servers (signalling indirection pushed back to the client), and proxy servers (either stateful or stateless forwarding of requests). SIP permits various techniques for securing the protocol, including IPsec and TLS, HTTP Digest authentication, and S/MIME. SIP can also implement mobility management at the application layer.

The Host Identity Protocol (HIP) introduces a new host name space based on public keys, thereby allowing the network and transport layers to be decoupled. The HIP architecture suggests that a new name service for host identities might be needed, also allows for indirection by "rendezvous servers"), and provides mobility management.

HIP carries and authenticates host identifiers. A host identifier (HI) is a public key. A host identity tag (HIT) is a 128-bit datum created by making a cryptographic hash of a host identifier. Each host identity uniquely identifies a single host.

To establish a secure tunnel between two HIP-enabled nodes requires the nodes to exchange His or HITs. This can be done either in an "opportunistic" mode or using alternative methods such as DNS, distributed hash tables (discussed in the document Tschofenig, H., "Interaction between SIP and HIP", draft-tschofenig-hiprg-host-identities-02, July 2005) or via a newly proposed approach using the offer/answer model based on SDP. Although an HIP node can initiate HIP communication "opportunistically", i.e. without *a priori* knowledge of the other node's HI/HIT, doing so exposes both nodes to man-in-the-middle attacks on the HIP handshake and its cryptographic protocol.

Several new draft specifications have been released by members of the IETF SIMPLE Working Group, laying the foundation for extensible communication protocols based upon XML and presence awareness.

The SIMPLE (SIP for Instant Messaging and Presence Leveraging Extensions) Internet Engineering Task force (IETTF) working group Specifications address configurable presence capabilities, authorization, policies, provisioned data, watcher information, partial presence optimisations, filtering, ad hoc list subscription, and instant messaging. SIMPLE is broken up into a number of separate and relatively independent specifications. This allows the system to be deployed in different sizes and configurations with different features. The three core technologies within SIMPLE are SIP itself, HTTP, and XML.

This body of work builds upon the SIP, used for multimedia communication signalling over IP networks, adding presence and instant messaging (IM) functionality.

With SIMPLE, presence and IM become just additional components in an overall communications system that allows voice, video, application sharing, and messaging, all of which are linked by presence. In the SIMPLE model, presence is much more than IM: it's about a user's willingness, ability and desire to communicate across all different kinds of media types, devices, and places. Before a user makes any kind of communication attempt with SIP - whether its to set up a voice-over-IP call, a video conference, or an IM chat - presence indicates the willingness of the recipients to participate in that session. Furthermore, in the SIMPLE model, IM is not something distinct from voice or video. Rather, IM is just another type of media that users can use to communicate. As a result of that view, all of the breadth of SIP's capabilities - conferencing, third-party call control, call features, security, and so on - can all be directly applied to IM as well as voice and video.

3G wireless standards use SIP for basic wireless phone calls, and use SIMPLE to add presence capabilities to the device. One area of usage for SIMPLE is in Push-to-Talk (PTT), also known as PTT over Cellular (PoC).

XML is used is to represent presence itself. In SIMPLE, presence is hierarchically structured data coded in an XML document called the Presence Information Data Format, or PIDF. PIDF is specified using XML schema, and relies on XML namespaces to provide extensibility. These PIDF documents are carried in SIP NOTIFY messages, which inform a user about a change in presence status.

Another area where XML is used is in the area of provisioned user data. A SIMPLE system needs access to provisioned data for each user of the system.

This provisioned data includes the user's buddy list (a list of contacts), their authorization and privacy policies, and their default presence status. Users need to be able to manage this data across many devices - their PCs, their wireless phones, and web applications. To enable this, the SIMPLE group has defined all of these pieces of provisioned data as XML. To manage them, a protocol called the XML Configuration Access Protocol (XCAP) has been defined, XCAP allows a client to remotely manipulate an XML document, adding and removing elements or attributes. This is done using normal HTTP primitives. However, XCAP defines a structure for HTTP URLs so that they can point not only to a specific document, but to XML elements and attributes within a document. As an example, to delete a buddy from a buddy list, a client would issue an HTTP DELETE operation. The HTTP URL in the DELETE request points to the specific SML element (which identifies the buddy) to be deleted.

Authorization and privacy play a key role in SIMPLE systems. A user may wish to be able to block other users from seeing their presence, or allow them to see only specific pieces of information.

PIDF is a common presence data format for CPP-compliant Presence protocols, and also defines a new media type "application/pidf+xml" to represent the XML MIME entity for PIDF. PIDF is discussed in document RFC 3863.

The information in an "application/pidf+xml" document comprises:
o PRESENTITY URL: specifies the "pres" URL of the PRESENTITY (the "presentivity" is the terminal whose presence status is published).
o List of PRESENCE TUPLES
   - Identifier: token to identify this tuple within the presence information.
   - STATUS: OPEN/CLOSED and/or extension status values.
   - COMMUNICATION ADDRESS: COMMUNICATION MEANS and CONTACT
      ADDRESS of this tuple. (optional)
   - Relative priority: numerical value specifying the priority of this COMMUNICATION ADDRESS. (optional)
   - Timestamp: timestamp of the change of this tuple.(optional)
   - Human readable comment: free text memo about this tuple (optional)

PIDF elements are associated with the XML namespace name 'urn:ietf:params:xml:ns:pidf', declared using an xmlns attribute, per [XMLNS].

The root of an "application/pidf+xml" object is a <presence> element associated with the presence information namespace. This contains any number (including 0) of <tuple> elements, followed by any number (including 0) of <note> elements, followed by any number of optional extension elements from other namespaces.

The <presence> element has an 'entity' attribute. The value of the 'entity' attribute is the 'pres' URL of the PRESENTITY publishing this presence document.

The <presence> element contains a namespace declaration ('xmlns') to indicate the namespace on which the presence document is based.

The <tuple> element carries a PRESENCE TUPLE, consisting of a mandatory <status> element, followed by any number of optional extension elements (possibly from other namespaces), followed by an optional <contact> element, followed by any number of optional <note> elements, followed by an optional <timestamp> element.

Tuples provide a way of segmenting presence information. Protocols or applications may choose to segment the presence information associated with a presentity for any number of reasons - for example, because components of the full presence information for a presentity have come from distinct devices or different applications on the same device, or have been generated at different times. Tuples should be preferred over other manners of segmenting presence information such as creating multiple PIDF instances.

The <tuple> element contains an 'id' attribute which is used to distinguish this tuple from other tuples in the same PRESENTITY. The value of an 'id' attribute is unique within 'id' attribute values of other tuples for the same PRESENTITY. An 'id' value is used by applications processing the presence document to identify the corresponding tuple in the previously acquired PRESENCE INFORMATION of the same PRESENTITY. The value of the 'id' attribute is an arbitrary string, and has no significance beyond providing a means to distinguish <tuple> values.

The <contact> element is optional because a PRESENTITY might need to hide its COMMUNICATION ADDRESS or there might be tuples not related to any COMMUNICATION MEANS. Tuples that contain a <basic> status element should contain a <contact> address. Tuples may contain conflicting presence status - one <tuple> might provide a <basic> <status> of OPEN, and another <tuple> in the same PIDF could contain a <basic> <status> of CLOSED, even if they both contain the same <contact> address.

The manner in which segmented presence information is understood by a WATCHER USER AGENT (for example an application running on a mobile terminal) is highly dependent on the capabilities of the WATCHER USER AGENT and the presence application in question. In the absence of any application-specific or protocol-specific understanding of the meaning of tuples, WATCHER USER AGENTS may obey the following guidelines. WATCHER USER AGENTS should note which tuples in the PIDF have changed their state since the last notification by correlating the 'id' of each <tuple> with those received in previous notifications and comparing both <status> values and <timestamp> elements in the tuples, if any are present.

The <status> element contains one optional <basic> element, followed by any number of optional extension elements (possibly from other namespaces), under the restriction that at least one child element appears in the <status> element. These children elements of <status> contain status values of this tuple. By allowing multiple status values in a single <tuple> element, different types of status values, e.g., reachability and location, can be represented by a <tuple>.

Note that, while the <status> element has at least one status value element, this status value might not be the <basic> element.

The <basic> element contains one of the following strings: "open" or "closed".

The values "open" and "closed" indicate availability to receive INSTANT MESSAGES if the <tuple> is for an instant messaging address.

They also indicate general availability for other communication means, but this memo does not specify these in detail.
open: In the context of INSTANT MESSAGES, this value means that the associated <contact> element, if any, corresponds to an INSTANT INBOX that is ready to accept an INSTANT MESSAGE.
closed: In the context of INSTANT MESSAGES, this value means that the associated <contact> element, if any, corresponds to an INSTANT INBOX that is unable to accept an INSTANT MESSAGE.

The <contact> element contains a URL of the contact address. It optionally has a 'priority' attribute, whose value means a relative priority of this contact address over the others.

The <note> element contains a string value, which is usually used for a human readable comment.

According to a first aspect of the invention there is provided a telecommunications network including a plurality of terminals, each having a presence status; and a presence server for monitoring the presence status of each of the terminals, wherein a first of said terminals is operable to invite a second of said terminals to publish its presence status to the first of said terminals via the presence server, in response to which the presence server is operable to seek acceptance from the second terminal of the invitation; characterised in that the presence server stores security data respective to each of the terminals, and in that, in response to the acceptance by the second terminal, the presence server provides the first terminal with the security data of the second terminal for establishing a secure communication session between the first terminal and the second terminal.

In the embodiment the security data is derived from the public key of the second terminal. The security data may comprise the public key of the second terminal, and may, for example, be a Host Identity. Alternatively, the security data may comprise a hash of the public key of the second terminal, and, for example, may comprise a Host Identity Tag.

In the embodiment the security data is provided by means of the Presence Information Data Format using the Host Identity Protocol. In the embodiment a new Presence Information element is proposed as an extension to the Presence Information Data Format, to include and convey the Host Identity/Host Identity Tag that corresponds to a particular device. That device may, for example, be identified using a SIP URI. With such an arrangement, a list may automatically be created of associations between the SIP URI and the security data for each device.

The embodiment specifies a new way of disseminating Host Identities (or Host Identity Tags) using SIP (see Rosenberg, J., Schulzrinne, H., Camarillo, G., Johnston, A., Peterson, J., Sparks, R., Handley, M., and E. Schooler, "SIP: Session Initiation Protocol", RFC 3261, June 2002), in particular using the SIMPLE Presence data model for use of the Host Identity Protocol (HIP) - see Moskowitz, R., "Host Identity Protocol", draft-ietf-hip-basee-03 (work in progress), June 2005. There has already been a lot of interest and relevant work regarding the interoperability and relationship of HIP and SIP and how to optimize the use of either of them. Hannes et al (see Tschofenig, H., "Interaction between SIP and HIP", draft-tschofenig-hiprg-host-identities-02, July 2005) have investigated a possible way of exchanging HITs using the Session Description Protocol (SDP) attribute contained in a SIP Invite request while a session is being established. This is one possible approach to optimizing the exchange of HIT when the opportunistic mode is not used using SIP to convey the HIT in the SDP attribute.

The embodiment proposes an alternative way of distributing the HIT by adding a new presence information element to the presence document, denoting the Host Identity that the particular user agent (UA) operates on, and may have registered with. The watcher (the device or UA receiving presence data) not only obtains information on the presentity's status for the UA instance reporting but the Host Identity as well.

As mentioned above, it is known to establish a secure tunnel between two HIP-enabled nodes by exchanging the HITs in "opportunistic" mode. Although a HIP node can initiate HIP communication "opportunistically", i.e. without *a priori* knowledge of its peer's HI, doing so exposes both endpoints to Man-in-the-Middle attacks on the HIP handshake and its cryptographic protocol. The embodiment provides a mechanism that allows a device to gain knowledge of peers' HIs before applications and Upper Layer Protocol's (ULPs) initiate communication.

The embodiment distributes the HIs/HITs between any two nodes by including them in the presence document by introducing a new presence information element as an extension to PIDF. Because the Presence Data Model defines a logical split between person (irrelevant in this context), service and device components, it is then possible to separate the notion of a service (one SIP UA identified by its Globally Routable Unique UA URI (GRUU)) that may be running on multiple physical devices, represented by multiple HIs/HITs. In addition, the presence information processing mechanism already provides privacy filtering rules such as those defined by Rosenberg, J., "Presence Authorization Rules", draft-ietf-simple-presence-rules-03, Jul. 2005. This can potentially determine who is authorized to retrieve presence information and the Host Idenity Tag, thus addressing the aforementioned concerns regarding "opportunistic" mode.

It is also possible for the UA publishing its presence information for the different services, to denote on which device (identified by its HI/HIT) it is available or "busy" etc.

The invention also provides a method of operating a telecommunications network as defined in the claims.

For better understanding of the present invention, a telecommunications network and method embodying the invention will now be described by way of example only, with reference to the accompanying drawings in, which:-
Figure 1 shows schematically the elements of a telecommunications network, including a cellular or mobile telecommunications network.

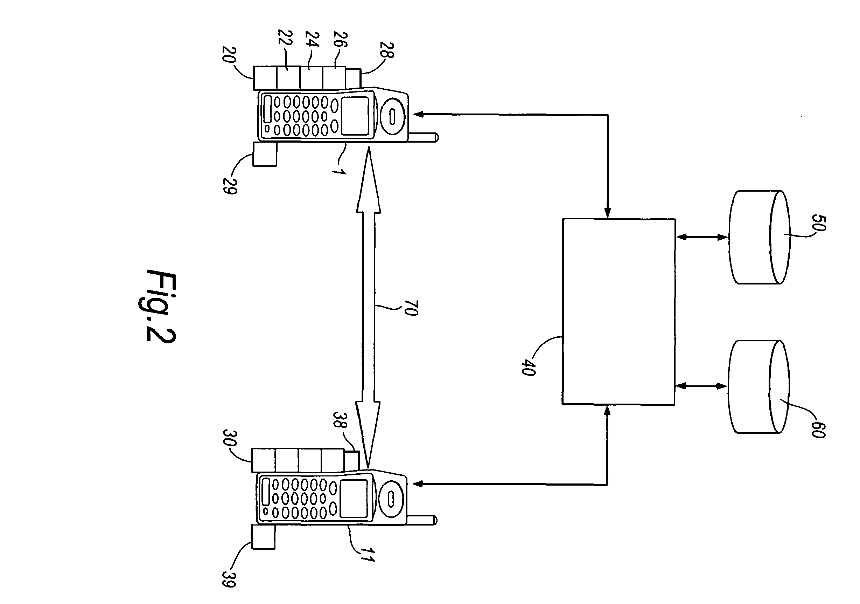

Figure 2 shows the distribution of HIs/HITs using a presence server;
Figure 3 shows a flow chart of the steps performed to exchange HIs/HITs in accordance with a first embodiment; and
Figure 4 shows a flow chart of the strips performed to exchange HIs/HITs in accordance with a second embodiment.

In the figures, like elements are generally designated with the same reference numerals.

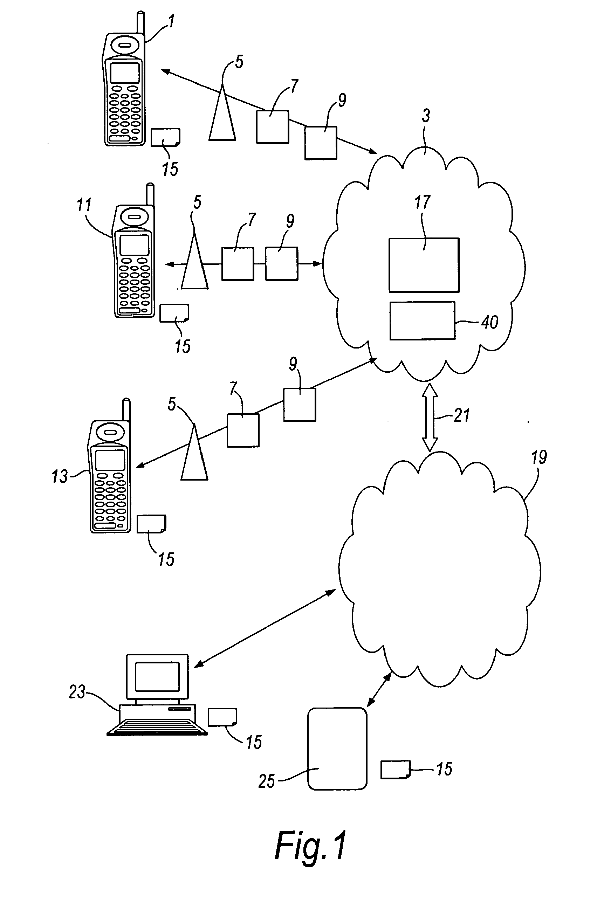

Figure 1 shows a cellular network. However, it should be appreciated that the invention is applicable to any type of network, although it is particularly applicable to a network where at least some of the devices communicate using mobile telecommunications/wireless data transmission. Mobile terminal 1 is registered with GSM/GPRS or UMTS (3G) mobile telecommunications network 3. The mobile terminal 1 may be a handheld mobile telephone, a personal digital assistant (PDA) or a laptop computer equipped with a datacard. The mobile terminal 1 communicates wirelessly with mobile telecommunications network 3 via the radio access network (RAN) of the mobile telecommunications network 3, comprising, in the case of a UMTS network, base station (Node B) 5, and radio network controller (RNC) 7.

Communications between the mobile terminal 1 and the mobile telecommunications network 3 are routed from the radio access network via GPRS support nodes (SGSN) 9, which may be connected by a fixed (cable) link to the mobile telecommunications network 3.

In the conventional manner, a multiplicity of other mobile terminals are registered with the mobile telecommunications network 3. These mobile terminals include mobile terminals 11 and 13. The terminals 11 and 13 communicate with the mobile telecommunications network 3 in a similar manner to the terminal 1, that is via an appropriate Node B 5, RNC 7 and SGSN 9.

The mobile telecommunications network 3 includes a gateway GPRS support node (GGSN) 17 which enables IP-based communications with other networks, such as the Internet 19 via an appropriate link 21. A multiplicity of terminals are connected to the Internet (by fixed or wireless links), and a PC terminal 23 and a PDA terminal 25 are shown by way of example. The network 3 includes a presence server 40, to be described in more detail below.

Each of the mobile terminals 1, 11 and 13 are provided with a respective subscriber identity module (SIM) 15. The SIM 15 is pre-programmed with a unique identification number, the "International Mobile Subscriber Identity" (IMSI) which is not visible on the card and is not known to the subscriber. The subscriber is issued with a publicly usable number, that is, the subscriber's telephone number, by means of which calls to the subscriber are initiated by callers. This number is the MSISDN. During the manufacturing process of each SIM, authentication information is also stored thereon under the control of the mobile telecommunications network 3. The mobile telecommunications network 3 itself stores details of each of the SIMs issued under its control. In operation of the mobile telecommunications network 3, a terminal 1, 11, 13 is authenticated (for example, when the user activates the terminal in the network with a view to making or receiving calls) by the network sending a challenge to the terminal 1, 11, 13 incorporating a SIM 15, in response to which the SIM 15 calculates a reply (dependent on the predetermined information held on the SIM - typically an authentication algorithm and a unique key Ki) and transmits it back to the mobile telecommunications network 3. The SGSN 9 checks that the reply received matches the expected calculated reply. If they match, the SIM 15 and the associated mobile terminal are considered to be authenticated.

It should be understood that such an authentication process can be performed for any terminal provided with a SIM 15 under control of the mobile telecommunications network 3. In the embodiment the terminal communicates wirelessly with the mobile telecommunications network 3 via the network's radio access network, although this is not essential. For example, the terminal may communicate with the network via the fixed telephone network (PSTN), via a UMA "access point" and/or via the Internet. The PC 23 and the PDA 25 may also be provided with a SIM 15 under the control of the network.

The SIM 15 used by the terminal 1,11,13,23,25 may be a SIM of the type defined in the GSM or UMTS standards specifications, or may be a simulation of a SIM - that is, software or hardware that performs a function corresponding to that of the SIM. The SIM may be in accordance with the arrangement described in WO-A-2004 036513.

It should be noted that the authentication process being described does not necessarily authenticate the human identity of the user. For example, mobile telecommunication networks have pre-pay subscribers who are issued with SIMs in return for pre-payment, enabling them to use network services.

However, the identity of such pre-pay subscribers may not be known by the network. Nevertheless, such a user cannot make use of the network until the network has authenticated the user's SIM - that is, has confirmed that such user is a particular user who has a particular pre-paid account with a network.

The network shown in Figure 1 comprises both the mobile telecommunications network 3 and the Internet 19 (which itself comprises a multiplicity of other networks).

In the embodiment now to be described mobile terminal 1 wishes to establish a secure communication session with mobile terminal 11.

Mobile terminal 1 is provided with a user agent (UA) application 20 installed thereon, and mobile terminal 11 is provided with the user agent application 30 installed thereon. The user agents 20,30 may be java or C++ based applications running on the mobile terminals 1,11. The user agent 20 includes a presence manager 22 which handles the presence information of the user of mobile terminal 1 and of the user's contacts stored in the contacts directory 24. The presence manager 22 deals with requests from the user to change his or her present state and stores the user's present state in a local cache 26 and informs the presence server 40 of any changes in the user's present state. The presence manager 22 also sends requests to the presence server 40 to determine the presence state of other users in the contacts directory 24.

The mobile terminal 11 is similarly configured. The user agent 30 includes presence manager 32, contacts directory 34 and cache 36, which correspond to the like-named items of the mobile terminal 1.

The presence states may be those typically used in instant messaging, such as "available", "unavailable", "busy", "away" etc.

The contacts directories 24,34 store for each contact the contact name, telephone number (MSISDN) and SIP URI.

The mobile terminal 1 additionally stores security data in store 28. This security data comprises a public key and a corresponding private key for the user agent 20. The public key corresponds to the Host Identity (HI) of the user agent 20. The store 28 may also store a Host Identity Tag (HIT), this being a hash of the HI.

Store 38 stores similar security data for the user agent 30 of the mobile terminal 11 - i.e. a private key and corresponding public key (HI), and HIT of the user agent 34.

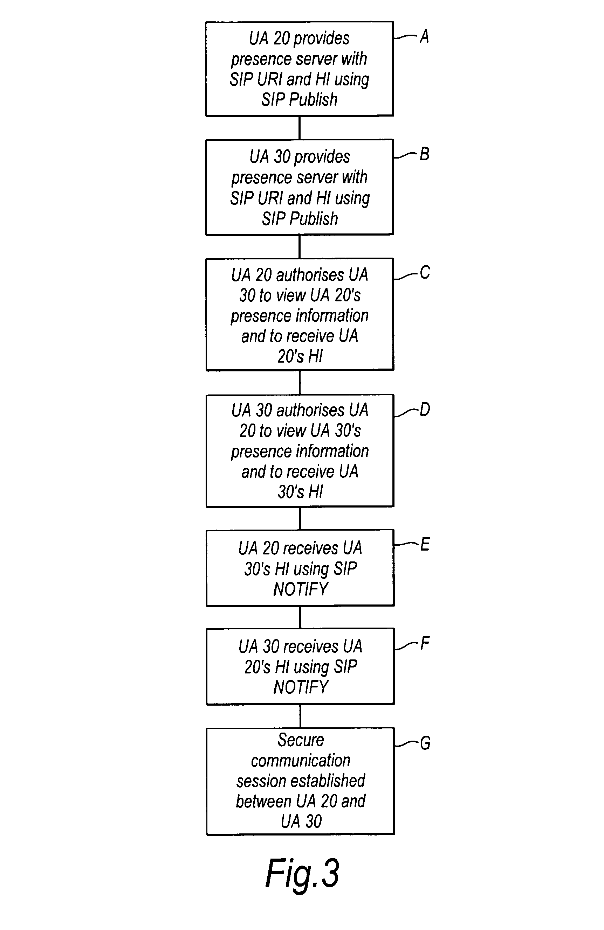

The process for establishing a secure communication channel between mobile terminal 1 and mobile terminal 11 will now be described with reference to the flow chart of Figure 3.

At step A the user agent 20 provides the presence server 40 with its SIP URI and its HI from store 28. This data is transmitted using a SIP PUBLISH message.

At step B the user agent 30 similarly provides the presence server 40 with its SIP URI and HI, from store 38, using a SIP PUBLISH command.

The presence server 40 stores the SIP URI and the corresponding HI of each of the user agents 20,30 in security data store 50.

Having received the SIP URI of the user agents 20,30, the presence server 40 communicates with the presence manager 22 of the user agent 20 and the presence manager 32 of the user agent 30 in order to maintain a record of the presence , status of the user agent 20 and the user agent 30, this presence data being stored for each user agent in the presence data store 60.

Although in the arrangement as now configured, the presence server 40 is aware of the presence status of the user agent 20 and the user agent 30, the presence server does not freely provide the present status of one user agent to another user agent. The presence data of the user agent is only provided after authorisation by that user agent.

At **step C** the user agent 20 authorises the user agent 30 to view the user agent 20's presence information and to receive the user agent 20's HI. This authorisation is communicated via the user agent 20 to the presence server 40. Typically, the user of mobile terminal 1 will use the user interface of the mobile terminal 1 to instruct the user agent 20 to authorise the user agent 30 to view the presence information and receive the HI. Typically, the contacts directory 24 will be perused and the contact information corresponding to user agent 30 will be retrieved (including the SIP URI of the user agent). An authorisation message is then compiled comprising the SIP URI of the user agent 30 and the HI of the user agent 20 and transmitted to the presence server 40.

On receipt of the authorisation from the user agent 20, the presence server modifies the presence data store 60 to indicate that the user agent 30 is authorised to view the presence data of the user agent 20. The presence status of the user agent 20 is then communicated from the presence data store 60 to the presence manager 32, and from there to the user agent 30 of the mobile terminal 11. The presence manager 32 enables the presence status of the user agent 20 to be displayed on the graphical user interface of the mobile terminal 11.

At **step D**, the user agent 30 authorises the user agent 20 to view the user agent 30's presence information and to receive the user agents 30's Host Identity in a similar manner to the authorisation performed by the user agent 20 in step C. The presence status store 60 is therefore updated to indicate that the user agent 20 should receive the presence status of the user agent 30 from the presence server 40. When received by the user agent 20, the presence status of the user agent 30 is stored in the presence manager 22 and can be displayed to the user of the mobile terminal 1 using a graphical user interface of that mobile terminal.

At **step E** the user agent 20 receives the user agent 30's HI by means of a SIP notify message from the presence manager 40. The HI of user agent 30 is stored in the contacts directory 24 in association with the SIP URI and other contact information corresponding to the user agent 30.

Similarly, at **step F**, the user agent 30 receives the user agent 20's HI by means of a SIP notify message from the presence manager 40. The UA 20's HI is stored in the contacts directory 34 in association with the SIP URI of the user agent 20.

At **step G** secure communication module 29 of mobile terminal 1 receives an instruction from the user, via the user agent 20, to establish a secure communication channel 70 between the user agent 20, and the user agent 30 of mobile terminal 11. The module 29 interrogates the contacts directory 24 to establish the SIP URI of the user agent 30 and the HI of the user agent 30. The module then begins sending communications to the user agent 30 that are encrypted using the HI of the user agent 30. These communications are received by the corresponding communication module 39 of the user agent 30 of the mobile terminal 11. The communication module 39 retrieves the private key of the user agent 30 from the security data store 38 and uses this to decrypt the communications received from the user agent 20 that are encrypted using the public key of the user agent 30 (that was provided in step F).

Communications from the user agent 30 are encrypted using the communication module 39 of the mobile terminal 11 in a similar way. That is, these communications are encrypted using the private key of the UA 30 stored in the security data store 38. These encrypted communications can be received and decrypted by the communication module 29 of the user agent 20 using the HI of the user agent 30 stored in the security data store 28 during step E. Thus, a secure communication channel 70 is established between the user agent 20 and the user agent 30.

The secure communications session 70 may be formed by the establishment of an IPSec tunnel. Media can then be exchanged between the user agents 20.

The exchange of public keys (HIs) between the user agent 20 and the user agent 30 is controlled by the presence server 40. UA 20 authorises a request from UA 30 to receive its HI, and likewise UA 30 authorises a request from UA 20 to receive its HI. Thus, each UA is in control of to which other UAs its HI is released. Further the His are transmitted via a different communication channel from that used for the communication session. Therefore, susceptibility to a man-in-the-middle attack is reduced.

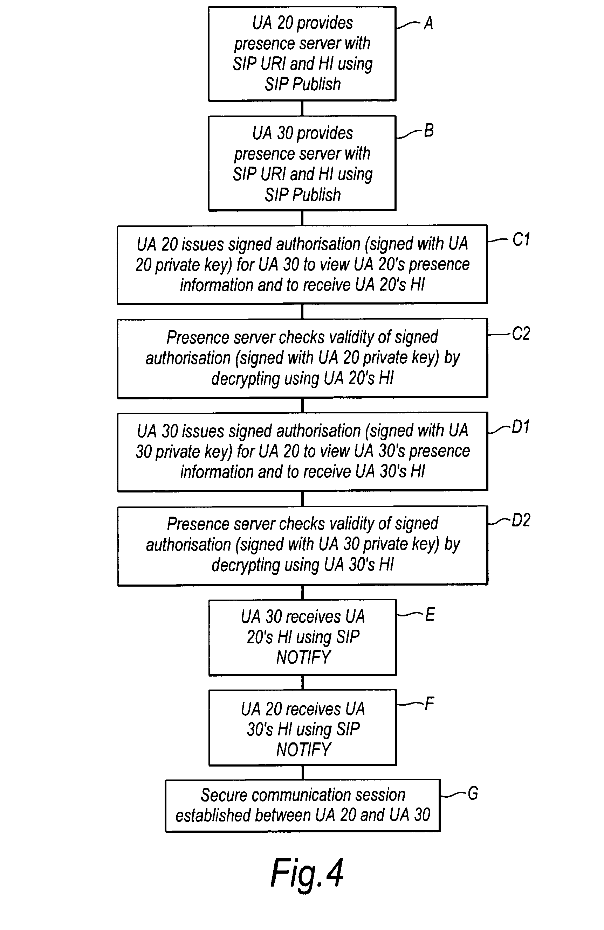

Figure 4 shows a modification to the Figure 3 embodiment. In the Figure 4 embodiment **steps A** and **B** are performed as before.

At **step C1** the UA 20 does not simply issue an authorisation "in the clear" for the user agent 30 to view the user agent 20's presence information and to receive user agent 20's HI. Instead, the user agent 20 signs the authorisation using the private key of the UA 20 stored in the security data store 28.

At **step C2** the presence server 40 checks the validity of the signed authorisation by retrieving the HI (public key) of the UA 20 from the store 50. The retrieved HI is used to decrypt the authorisation. Successful decryption of the authorisation indicates that it was signed by the UA 20, as the UA 20's security data store 28 is the only entity that has knowledge of the private key of the UA 20.

At **step D1** the UA 30 issues a signed authorisation signed with the UA 30 private key retrieved from security data store 38. The authorisation is for the user entity 20 to view the user agent 30's presence information and to receive the user agent 30's HI. The signed authorisation is transmitted to the presence server 40.

At **step D2** the presence server retrieves from the store 50 the HI of the UA 30. This HI is used to decrypt the signed authorisation received from the UA 30. Successful decryption of the authorisation indicates that the authorisation was sent from the UA 30 and not from some other entity because the security data store 38 of the UA 30 is the only entity that has knowledge of the private key of the UA 30.

**Steps E,F** and **G** are then performed in the same way as in the flow chart of Figure 3.

In the Figure 3 and Figure 4 embodiments it has been described that the HI of the user agent is exchanged. Instead of the HI (public key) of the user agent being exchanged, the HIT may be exchanged and used to establish a secure communications session.

In summary, the basic steps that are followed to establish the secure communication session are as follows:
1. Retrieval of the HI/HIT through presence information.
2. Initiation of the session using a preconditions-like approach similar to that used for Quality of Service (QoS) in Camarilo, G., "Integration of Resource Management and Session Initiation Protocol (SIP), RFC3312, October 2002.
3. Establishment of an IPSec tunnel using the keys derived by the HI/HIT
4. Establishment of the session.
5. Media exchange.

The proposed solution is flexible enough to also work with a rendezvous server as proposed in by Laganier, J. and L. Eggert, "Host Identity Protocol (HIP) Rendezvous Extension", draft-ietf-hip-rvs-03 (work in progress), June 2005.The IP address obtained for the particular HI/HIT corresponding to the particular UA (SIP URI) from the watcher can be the address of a rendezvous server (RVS). When an initiator (I) wants to establish a HIP association with UA 20 then the I1 message, containing the HI/HIT of UA 30 as well as that of UA 20, will be directed towards the IP address of the RVS rather than towards the IP address of the responder UA (which will convey the message to UA 30).

In order to distribute HIs/HITs, the conventional PIDF is modified. An extension element to be used to contain the HIT. This extension is intended to be used within the PIDF (see Sugano, H., Fujimoto, S., Klyne, G., Bateman, A., Carr, W. and J. Peterson, "Presence Information Data Format (PIDF)"). Following the Presence Data Model guidelines, it defines a document that describes device capabilities, and so should be used within the device component of the Presence Data Model.

### The XML schema definition:

The proposed extension schema contains only one element under a new proposed namespace "urn:ietf:params:xml:ns:pidf:hitexten".

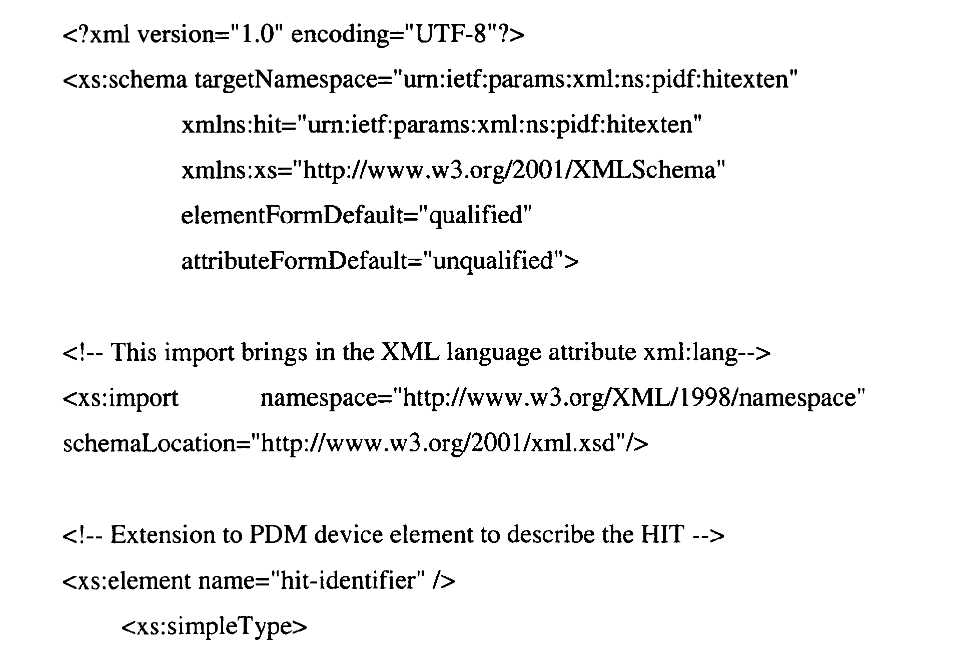

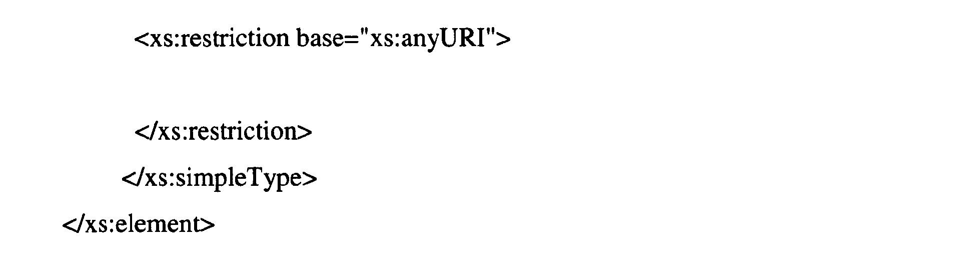

### Example

An example combining PIDF, the Presence Data Model and the HIT extension is shown below:

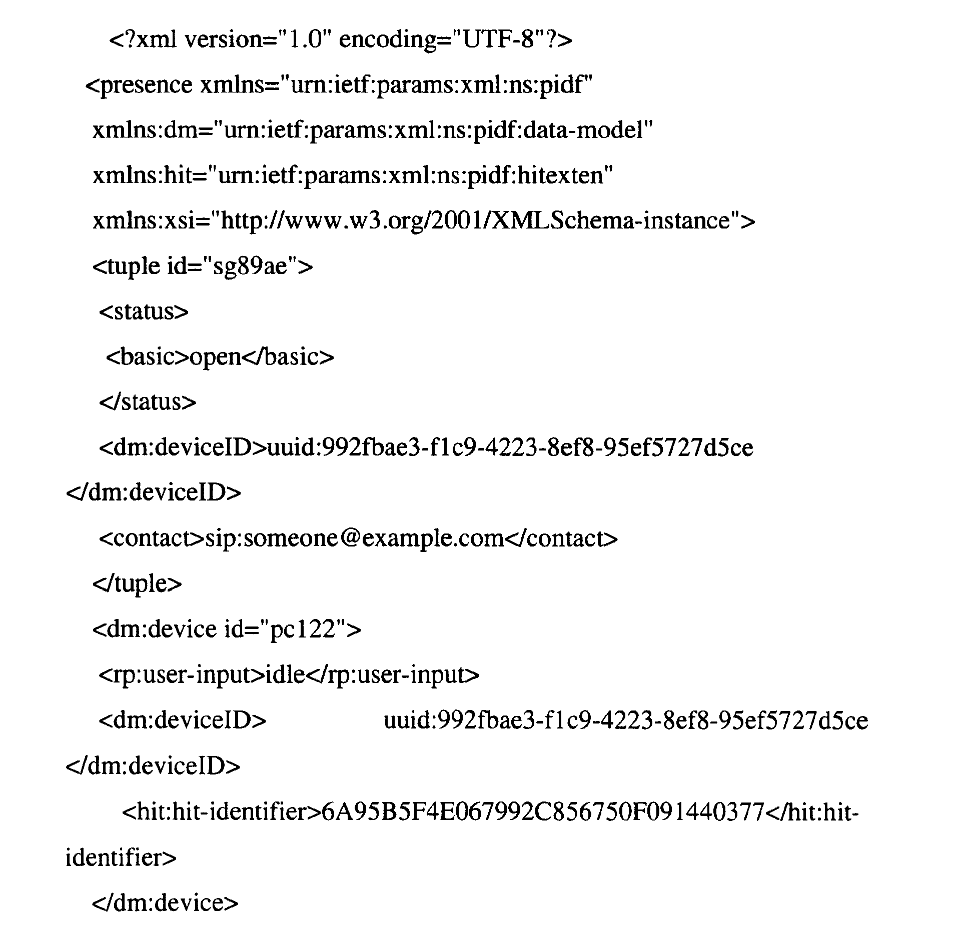

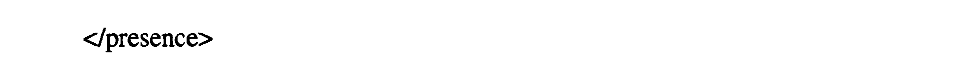

Currently based on the HIP draft, the mapping is FQDN -> IP lookup, FQDN - > HI lookup, which results in the mapping of the HI to IP address. The proposed method achieves the dissemination of the HI where each UA resides, and potentially creates a relationship at the watcher end between the SIP URI (which may or may not be registered) or UA by its GRUU and the HIT. When a UA wants to initiate a service it will still need to do a HIT to IP lookup in order to initially establish a secure communication using HIP and subsequently the wanted service. The result is the watcher being able to separate the notion of a service (one SIP UA identified by its Globally Routable Unique UA URI (GRUU)) that may be running on multiple physical devices, represented by multiple HITs and thus initiate a service accordingly.

Furthermore, the "opportunistic" mode of HIP raises some security considerations, which the current proposal addresses. The Presence Authorization Rules provide a secure way of disseminating the HI's that a user may have registered with every UA instance only to those who are authorized to receive them.

As briefly mentioned above the addition of the HI/HIT as part of the Presence Document can assist the watcher establish communication using the SIP offer/answer model. How exactly the watcher uses the HIT is out of scope of the present document. One possible use of this is described by Tschofenig, H., "Interaction between SIP and HIP", draft-tschofenig-hiprg-host-identities-02 (work in progress), July 2005. The mechanism presented in by Tschofenig, H can be further enhanced by introducing a preconditions-like mechanism, similar to that of Camarilo, G., "Integration of Resource Management and Session Initiation Protocol (SIP), RFC3312, October 2002 - that is being used for resource reservation. This may guarantee the establishment of a security association prior to starting any media exchange.

Finally, recently there was discussion in the SIMPLE WG regarding the definition of appropriate identifiers to represent device components as part of the presence data model. The addition of the <hit-identifier> as an extension to PIDF can potentially also serve this purpose.

All security considerations specified in the Presence Data Model (Rosenberg, J., "A Data Model for Presence", draft-simple-data-model-05, Sept. 2005) and PIDF (Sugano, H., Fujimoto, S., Klyne, G., Bateman, A., Carr, W. and J. Peterson, "Presence Information Data Format (PIDF)") apply. Compared to PIDF, this presence document format reveals additional information about presentities that can be highly sensitive. Beyond traditional security measures to protect confidentiality and integrity, systems should also offer mechanisms to selectively reveal information to particular watchers. Therefore privacy filtering mechanisms similar to those described in Rosenberg, J., "Presence Authorization Rules", draft-ietf-simple-presence-rules-03, Jul. 2005 will apply for the <hit-identifier> element as well.

Although the <provide-unknown-attribute> element of the presence authorization rules might be used to restrict access to the <hit-identifier> element, it may be appropriate to define a new extension to the Presence Authorisation Rules document for that purpose.

All the documents referred to herein are fully incorporated by reference.

## Claims

1. A telecommunications network (3) including a plurality of terminals (1,11), each having a presence status; and a presence server (40) for monitoring the presence status of each of the terminals (1,11), wherein a first of said terminals (1) is operable to invite a second of said terminals (11) to publish its presence status to the first of said terminals (1) via the presence server (40), in response to which the presence server (40) is operable to seek acceptance from the second terminal (11) of the invitation; **characterised in that** the presence server (40) stores security data respective to each of the terminals (1,11), and **in that**, in response to the acceptance by the second terminal (11), the presence server (40) provides the first terminal (1) with the security data of the second terminal (11) for establishing a secure communication session (70) between the first terminal (1) and the second terminal (11).

2. The network of claim 1, wherein the security data is derived from the public key of the second terminal.

3. The network of claim 2, wherein the security data comprises the public key of the second terminal.

4. The network of claim 2, wherein the security data comprises a hash of the public key of the second terminal.

5. The network of claim 1,2,3 or 4, wherein the presence server (40) provides the second terminal (11) with the security data of the first terminal (1) for establishing a secure communication session (70) between the first terminal (1) and the second terminal (11).

6. The network of any one of the preceding claims, wherein the security data comprises a Host Identity.

7. The network of any one of claims 1 to 5, wherein the security data comprises a Host Identity Tag.

8. The network of claims 6 or 7, wherein the security data is provided using Host Identity Protocol.

9. The network of any one of claims 1 to 8, wherein the security data is provided by means of Presence Information Data Format.

10. The network of any one of claims 1 to 9, wherein the acceptance by the second terminal (11) comprises a signed authorisation, signed using data corresponding to the security data of the second terminal.

11. A method of operating a telecommunications network (3) including a plurality of terminals (1,11), each having a presence status, and a presence server (40) for monitoring the presence status of each of the terminals (1,11), the method including receiving an invitation from a first of said terminals (1) to a second of said terminals (11) to publish the latter terminal's present status to the first of said terminals (1) via the presence server (40); in response to reception of said request, the presence server seeking acceptance from the second terminal (11) of the invitation; **characterised in that** the presence server stores security data respective to each of the terminals (1,11), and **in that**, in response to the acceptance by the second terminal (11), the presence server (40) provides the first terminal (1) with the security data of the second terminal (11) for establishing a secure communication session (70) between the first terminal (1) and the second terminal (11).

12. The method of claim 11, wherein the security data is derived from the public key of the second terminal.

13. The method of claim 12, wherein the security data comprises the public key of the second terminal.

14. The method of claim 2, wherein the security data comprises a hash of the public key of the second terminal.

15. The method of claim 11,12,13 or 14, further comprising the step of the presence server (40) providing the second terminal (11) with the security data of the first terminal (1) for establishing a secure communications session (70) between the first terminal (1) and the second terminal (11).

16. The method of any one of claims 11 to 15, wherein the security data comprises a Host Identity.

17. The method of any one of claims 11 to 15, wherein the security data comprises a Host Identity Tag.

18. The method of claims 16 or 17, wherein the security data is provided using Host Identity Protocol.

19. The method of any one of claims 11 to 18, wherein the security data is provided by means of Presence Information Data Format.

20. The method of any one of claims 11 to 19, wherein the acceptance by the second terminal comprises a signed authorisation, signed using data corresponding to the security data of the second terminal.
